# FASCICULE DE BREVET EUROPEEN

(11) **EP 3 650 980 B1**
(45) Date de publication et mention de la délivrance du brevet: **06.05.2026**
(21) Numéro de dépôt: 19205069.8
(22) Date de dépôt: 24.10.2019
(51) Int. Cl.: G06F 1/04

(54) **PROCÉDÉ D'ÉLABORATION DE SIGNAUX DÉCLENCHEURS POUR UNE COMMANDE D'UNE INTERFACE MULTIMÉDIA, ET CIRCUIT INTÉGRÉ CORRESPONDANT**
VERARBEITUNGSVERFAHREN VON AUSLÖSENDEN SIGNALEN FÜR EINE STEUERUNG EINER MULTIMEDIA-SCHNITTSTELLE, UND ENTSPRECHENDER INTEGRIERTER SCHALTKREIS
METHOD FOR MANUFACTURING ACTIVATING SIGNALS FOR CONTROLLING A MULTIMEDIA INTERFACE, AND CORRESPONDING INTEGRATED CIRCUIT

(30) Priorité: 06.11.2018 FR 1860188
(43) Date de publication de la demande: 13.05.2020
(73) Titulaire: STMicroelectronics (Rousset) SAS, 13790 Rousset (FR)
(72) Inventeur: FERRAND, Olivier, 13620 CARRY LE ROUET (FR)
(74) Mandataire: Casalonga

(56) Documents cités:
- WO-A1-2015/058718
- CN-A- 101 592 976
- JP-A- 2002 229 544
- JP-A- 2004 266 745
- JP-A- 2018 045 283
- TW-B- I 620 465
- US-A- 5 990 858
- US-A1- 2001 050 724
- US-A1- 2004 234 121
- US-A1- 2007 013 811
- US-B1- 10 123 385
- US-B1- 6 369 856
- US-B1- 8 560 753
- CHANGDONG LIU ET AL: "Multipoint Multimedia Teleconference System with Adaptive Synchronization", IEEE JOURNAL ON SELECTED AREAS IN COMMUNICATIONS, IEEE SERVICE CENTER, PISCATAWAY, US, vol. 14, no. 7, 1 September 1996 (1996-09-01), XP011054534, ISSN: 0733-8716

## Description

Des modes de mise en œuvre et de réalisation concernent la génération de signaux numériques de cadencement, plus particulièrement pour élaborer des signaux déclencheurs pour une commande externe d'un module électronique.

Généralement, les synchronisations d'opérations logicielles ou matérielles avec un module électronique se font de manière statique avec un signal d'interruption généré par le module. Les modules peuvent ne fournir aucun signal d'interruption.

Dans l'exemple d'un module électronique d'interface multimédia, un signal d'interruption est généré une fois par image, typiquement au moment où l'interface multimédia traite une ligne donnée d'une trame d'image.

Par conséquent, il n'y a typiquement qu'un seul point de synchronisation par trame (également désigné par le terme « signal d'interruption ») mis à disposition par l'interface d'images.

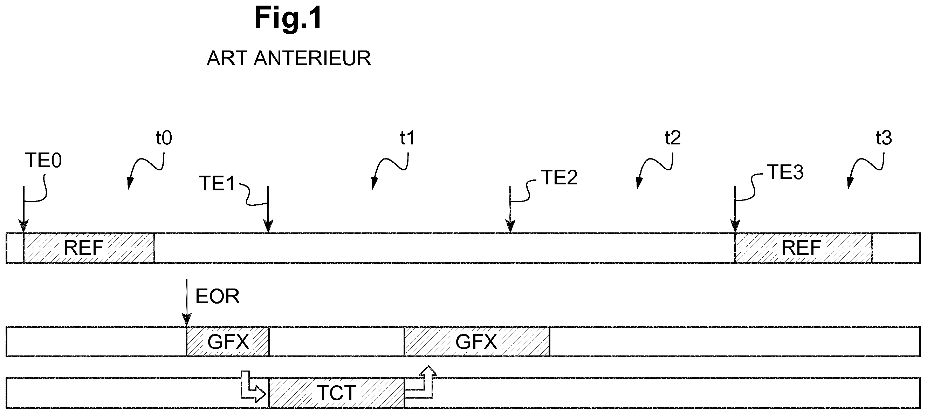

Or, comme l'illustre la figure 1 en relation avec une interface d'affichage, des opérations logicielles et matérielles, exécutées ou commandées par une unité de calcul, dépendent toutes de cet unique point de synchronisation TEi par trame ti (avec 0≤i≤3 sur la figure 1). Par exemple ces opérations logicielles et matérielles sont typiquement une lecture de coordonnées tactiles, un traitement numérique graphique, une synchronisation en mémoire tampon, et autres.

Typiquement, une opération de rafraîchissement de l'affichage REF est exécutée à un moment correspondant à un signal d'interruption TEi. Une opération logicielle graphique GFX est classiquement exécutée à un moment correspondant à un signal de fin de rafraîchissement EOR. Une lecture de coordonnées tactiles TCT est classiquement exécutée à un moment correspondant lui-aussi à un signal d'interruption TEi.

Ainsi, dans le cas représenté par la figure 1, l'opération logicielle graphique GFX a été interrompue par la lecture de coordonnées tactiles TCT au moment du signal d'interruption TE1, et n'est pas terminée au moment du signal d'interruption suivant TE2. Aucune opération de rafraîchissement de l'affichage n'est exécutée au moment du signal d'interruption TE2, et l'opération de rafraîchissement résultant de la tâche graphique GFX est retardée jusqu'au prochain signal d'interruption TE3.

En d'autres termes, la figure 1 illustre un exemple dans lequel un seul point de synchronisation par trame n'est pas suffisant, car de multiples opérations logicielles et matérielles devraient pouvoir être exécutées ou activées à plusieurs moments au cours d'une trame donnée ou sur plusieurs trames.

En outre, dans d'autres cas de figures, le signal d'interruption généré régulièrement par l'interface multimédia peut réactiver (ou « réveiller ») l'unité de calcul à des moments inopportuns. Cela introduit une consommation d'énergie inutile, ce qui peut être très nuisible dans les systèmes ayant peu de ressources énergétiques.

Par ailleurs, les systèmes de commande des interfaces de caméra, qui elles-aussi offrent typiquement un seul point de synchronisation par trame, requièrent généralement des éléments matériels couteux, par exemple des mémoires tampon de grande taille.

En effet, une interface de caméra fournit un flux sortant de données d'images, et si la commande de l'interface de caméra reçoit le signal de synchronisation une seule fois par trame, une trame entière du flux sortant doit être stockée dans une mémoire tampon de premier plan à chaque signal de synchronisation. Cela peut représenter une grande quantité de données et nécessiter une mémoire tampon à grande capacité de stockage, généralement couteuse.

D'un point de vue global, les commandes des interfaces multimédia ne sont pas optimisées, car contraintes par les points de synchronisation générés par les interfaces multimédia. Par ailleurs, il est souhaitable de ne pas modifier les générations de signaux de synchronisation des technologies d'interface multimédia existantes.

Il existe un besoin de pouvoir bénéficier de signaux représentatifs de l'usage ou du fonctionnement d'un module électronique, non-systématiquement disponibles à l'extérieur du module, notamment dans le cadre d'une commande externe du module.

TW I 620 465 B décrit un contrôleur de zoom du téléviseur qui génère un signal de synchronisation verticale (VSYNC) et un signal de synchronisation horizontale (HSYNC) pour synchroniser l'image. Dans d'autres modes de mise en œuvre, si le processeur 110 ne peut pas générer ou génère un signal de synchronisation horizontale HSYNC incorrect, le processeur 110 peut simuler le signal de synchronisation horizontale HSYNC via un générateur de signal synchrone pour le PFM.

US 8 560 753 B1 décrit un séquenceur d'encodage qui émule un contrôleur d'affichage local en fournissant des signaux de synchronisation (par exemple, un signal VSYNC) au processeur de dessin. Un moniteur de commandes filtre les commandes de dessin émises par le processeur central à destination du processeur de dessin afin d'en extraire des informations utiles facilitant ou optimisant l'encodage de l'affichage. Les informations utiles comprennent la connaissance du type d'image, des coordonnées, de la qualité de l'image, de la priorité d'affichage (c'est-à-dire la latence) et d'autres attributs de l'affichage. Le moniteur de commandes surveille également les commandes du processeur relatives aux paramètres de configuration de l'affichage, aux instructions de configuration et aux spécifications de synchronisation, y compris les taux de rafraîchissement de l'écran et autres, qui seraient normalement envoyés à un contrôleur d'affichage local, et transmet ces informations au contrôleur d'affichage distant . Les spécifications de synchronisation sont transmises au séquenceur d'encodage, qui utilise ces informations pour fournir une synchronisation simulée au processeur de dessin (par exemple, en générant un signal VSYNC).

Des modes de réalisation et de mise en œuvre proposent une minuterie graphique générant des signaux déclencheurs permettant une gestion intelligente d'événements graphiques, et d'offrir une solution pour optimiser des commandes de modules d'interface multimédia, et plus généralement les modules électroniques pouvant avoir de multiples signaux de synchronisation, de façon simple et polyvalente et sans intervention sur les modules en tant que tels.

L'invention est définie par les revendications indépendantes.

Par émuler un signal, on entend une reproduction ou une recréation de ce signal tel qu'il est ou tel qu'il devrait être, sans disposer de ce signal en substance.

En d'autres termes, il est proposé une solution permettant de bénéficier d'un signal utile et qui n'est pas initialement disponible. Ainsi, les problématiques de contraintes des points de synchronisations fournis par le module électronique peuvent être résolues.

Selon un mode de mise en œuvre, ladite génération dudit au moins un signal de cadencement comprend une division de la fréquence d'un signal numérique d'horloge élémentaire.

Par exemple, la génération dudit au moins un signal de cadencement émulant ledit au moins un premier signal utilise le deuxième signal en tant que signal numérique d'horloge élémentaire.

Par exemple, la génération dudit au moins un signal de cadencement émulant ledit au moins un premier signal utilise le deuxième signal pour réinitialiser une phase dudit signal de cadencement issu de ladite division de la fréquence du signal numérique d'horloge élémentaire.

Avantageusement, la génération des signaux de cadencement est paramétrable en fonction de caractéristiques intrinsèques du module. Ainsi le procédé peut s'adapter à différentes technologies données du module électronique.

Selon un mode de mise en œuvre, les fronts des signaux de cadencement peuvent être les fronts montant du signal numérique ou les fronts descendant du signal numérique.

Ainsi, l'élaboration de signaux déclencheurs permet disposer de points de synchronisations différents de ceux qui sont immédiatement fournis par le module électronique. L'élaboration de signaux déclencheurs a trait à une optimisation de l'usage et de la conception des commandes des modules électroniques, en particulier les interfaces multimédia. Les points de synchronisation peuvent notamment être élaborés de façon à optimiser la commande. En outre, les signaux déclencheurs étant générés en interne, séparément mais à partir dudit signal de synchronisation provenant du module électronique, le procédé permet d'élaborer divers signaux déclencheurs en harmonie avec le module électronique, sans le modifier.

Selon un mode de mise en œuvre, ledit au moins un comptage de fronts des signaux de cadencement comprend plusieurs comptages de fronts des signaux de cadencement, et ladite génération des signaux déclencheurs comprend au moins une génération d'un signal déclencheur complexe conditionnée par une combinaison de conditions sur différentes valeurs courantes desdits comptages.

Les différents comptages permettent d'élaborer des signaux déclencheurs pratiques pour des usages ou des besoins du module électronique. La génération d'un signal déclencheur complexe permet par exemple d'élaborer des signaux déclencheurs représentatifs d'événements précisément conditionnés en relation avec l'usage ou les besoins du module électronique.

Selon un mode de mise en œuvre, ledit module électronique est un module d'interface multimédia, tel qu'une interface d'affichage ou une interface de caméra.

En effet, bien que le procédé selon cet aspect soit prévu pour tout type de module électronique pour lesquels il est avantageux de bénéficier de plusieurs points de synchronisation, il est particulièrement avantageux de bénéficier du procédé selon cet aspect pour les modules d'interface multimédia, qui sont généralement affectées de sous-optimisations en la matière.

Avantageusement, le procédé comprend en outre une surveillance d'une tâche graphique dudit module d'interface multimédia, comprenant une attente d'une réalisation de la tâche graphique, un chronométrage de l'attente cadencé par au moins l'un desdits signaux déclencheur, et une au moins une génération d'un signal de sécurité si le chronométrage de l'attente a dépassé une valeur de référence.

Ce mode de mise en œuvre permet de prendre une mesure de sécurité supplémentaire et indépendante. En effet, les signaux déclencheurs générés ainsi de façon indépendante (par exemple de façon indépendante d'une unité de calculs annexe) permettent de détecter un mauvais usage de l'interface multimédia, éventuellement dû à un dysfonctionnement d'une commande de l'interface multimédia. Cela peut permettre d'éviter une détérioration de certaines interfaces multimédia.

Les signaux déclencheurs sont ainsi générés pour entrainer les opérations de commande de l'interface multimédia de façon à optimiser ladite commande, par exemple relativement aux capacités matérielles dont dispose la commande.

Selon un mode de mise en œuvre dans lequel le module électronique est un module d'interface d'affichage, lesdites opérations comprennent au moins l'une des opérations suivantes :
- une opération de rafraîchissement de l'interface d'affichage à un moment commandé par un premier signal déclencheur ;
- une opération de calcul graphique à un moment commandé par un deuxième signal déclencheur ;
- une opération de lecture de coordonnées tactiles d'un contrôleur tactile à un moment commandé par un troisième signal déclencheur.

Etant indépendantes et autonomes car commandées par lesdits signaux déclencheurs, ces opération de commande, contrairement aux opérations classiquement commandées par un seul point de synchronisation, ne subissent pas d'éventuelle incompatibilités mutuelles ou interruptions. Bien entendu l'élaboration des signaux déclencheurs est configurée de façon à optimiser les exécutions desdites opérations de commandes.

Selon un mode de mise en œuvre dans lequel le module électronique est un module du type interface de caméra, lesdites opérations comprennent au moins l'une des opérations graphiques suivantes :
- une émission d'un flux sortant de données d'image à un moment commandé par un premier signal déclencheur ;
- un traitement numérique d'un flux de données d'image, tel qu'une compression des données, à un moment commandé par un deuxième signal déclencheur.

Cela peut par exemple permettre de réaliser un traitement préliminaire du flux sortant de données d'images, par exemple une compression des données d'images, en flux tendu suite à l'acquisition d'images ou de portions d'images, afin d'éviter un besoin de stockage en mémoire tampon d'une grande quantité de données. En d'autres termes, une image du flux de données d'image peut être traitée par portions et être évacuée de la mémoire tampon par portions, contrairement à un traitement classique dans lequel chaque image est entièrement stockée dans la mémoire tampon.

Selon un autre aspect il est proposé un circuit intégré, comportant un générateur de signaux de cadencement configuré pour générer à l'extérieur d'un module électronique au moins un signal numérique de cadencement émulant au moins un premier signal de synchronisation interne au module et non-disponible à l'extérieur du module.

Selon un mode de réalisation, ledit générateur de signaux de cadencement comprend un diviseur de fréquence configuré pour diviser la fréquence d'un signal numérique d'horloge élémentaire, pour générer ledit au moins un signal de cadencement.

Selon un mode de réalisation, en présence d'un deuxième signal de synchronisation provenant du module et disponible à l'extérieur du module, le générateur de signaux de cadencement est configuré pour générer ledit au moins un signal de cadencement émulant ledit au moins un premier signal en utilisant le deuxième signal.

Par exemple, le générateur de signaux de cadencement est configuré pour générer ledit au moins un signal de cadencement émulant ledit au moins un premier signal en utilisant le deuxième signal en tant que signal numérique d'horloge élémentaire.

Par exemple, le générateur de signaux de cadencement est configuré pour générer ledit au moins un signal de cadencement émulant ledit au moins un premier signal en utilisant le deuxième signal pour réinitialiser une phase dudit signal de cadencement issu de la division de la fréquence du signal numérique d'horloge élémentaire par le diviseur de fréquence.

Avantageusement, le générateur de signaux de cadencement est paramétrable en fonction de caractéristiques intrinsèques du module.

Selon un mode de réalisation, le circuit intégré comprend en outre un circuit d'élaboration de signaux déclencheurs pour une commande externe du module, comprenant au moins un circuit de comptage configuré pour compter des fronts des signaux de cadencement, et un circuit générateur de signaux déclencheurs configuré pour générer les signaux déclencheurs de façon conditionnée sur les valeurs courantes dudit au moins un circuit de comptage.

Selon un mode de réalisation, ledit au moins un circuit de comptage comprend plusieurs circuits de comptages, et ledit circuit générateur de signaux déclencheurs est configuré pour générer au moins un signal déclencheur complexe de façon conditionnée par une combinaison de conditions sur différentes valeurs courantes desdits circuits de comptages.

Selon un mode de réalisation, le circuit intégré est configuré pour une interface d'affichage ou une interface de caméra.

Le circuit intégré peut comprendre en outre un dispositif de surveillance d'une tâche graphique dudit module d'interface multimédia, configuré pour attendre une réalisation de la tâche graphique, chronométrer l'attente de façon cadencée par au moins l'un desdits signaux déclencheurs, et générer au moins un signal de sécurité si le chronométrage de l'attente a dépassé une valeur de référence respective.

Le circuit intégré peut par exemple être incorporé à un microcontrôleur ou à un système sur puce.

Il est également proposé un système de commande d'un module électronique, comprenant le module électronique et un circuit intégré tel que défini ci-avant, le système comprenant une unité de calcul configurée pour réaliser de façon indépendante et autonome des opérations de commande à des moments respectivement déclenchés par lesdits signaux déclencheurs.

Par exemple, le module électronique est un module d'interface d'affichage et l'unité de calcul est configurée pour réaliser au moins l'une des opérations de commande suivantes :
- une opération de rafraîchissement de l'interface d'affichage à un moment commandé par un premier signal déclencheur ;
- une opération de calcul graphique à un moment commandé par un deuxième signal déclencheur ;
- une opération de lecture de coordonnées tactiles d'un contrôleur tactile appartenant au système, à un moment commandé par un troisième signal déclencheur.

Par exemple, le module électronique est un module d'interface de caméra et l'unité de calcul est configurée pour réaliser au moins l'une des opérations de commande suivantes :
- une opération d'émission d'un flux sortant de données d'image à un moment commandé par un premier signal déclencheur ;
- une opération de traitement numérique d'un flux de données d'image, tel qu'une compression des données, à un moment commandé par un deuxième signal déclencheur.

Il est également proposé un appareil électronique, tel qu'une montre connectée ou une caméra vidéo, comportant un système tel que défini ci-avant, ou un circuit intégré tel que défini précédemment.

D'autres avantages et caractéristiques de l'invention apparaîtront à l'examen de la description détaillée de modes de réalisation et de mise en œuvre, nullement limitatifs, et des dessins annexés sur lesquels :
- la figure 1, précédemment décrite, illustre un exemple classique de commande d'une interface multimédia ;
- les figures 2 à 5 illustrent schématiquement différents modes de mise en œuvre de l'invention ;
- les figures 6 à 10 illustrent schématiquement des modes de réalisation de l'invention.

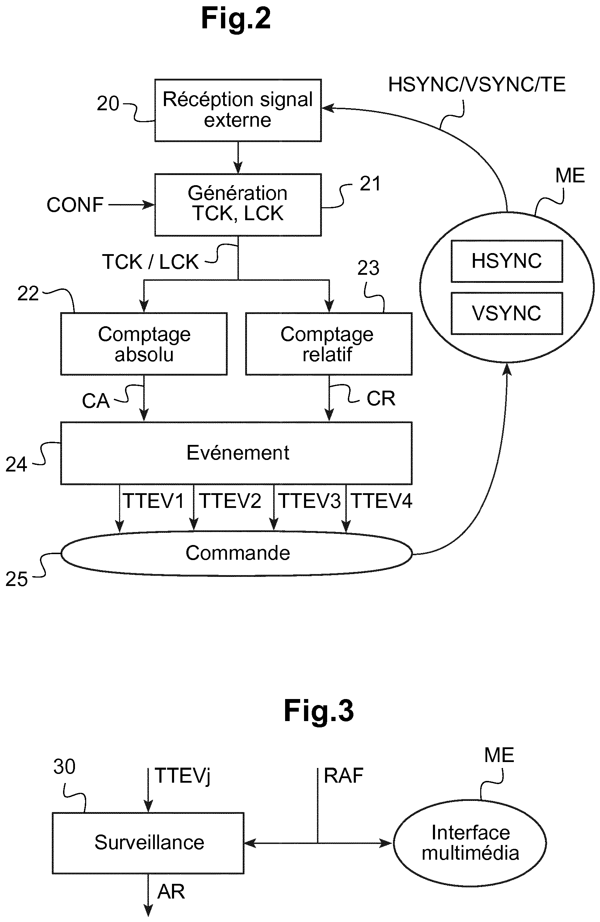

La figure 2 représente un exemple de procédé d'élaboration de signaux déclencheurs TTEVi (1≤i≤4) pour une commande 25 d'un module électronique ME.

Le procédé s'applique à une commande de tout type de module électronique pour lequel plusieurs points de synchronisations peuvent être souhaitables.

En particulier, les commandes de modules électroniques du type interface multimédia présentent un besoin important de pouvoir bénéficier de plusieurs points de synchronisations. Ainsi, il va être fait référence dans la suite à un module électronique du type module d'interface multimédia. Par interface multimédia, on entend en particulier les interfaces d'afficheurs, par exemple les écrans TFT-LCD ou AMOLED, et les interfaces d'acquisition d'images vidéo, du type capteurs CCD ou CMOS.

Le procédé comprend une génération 21 de signaux numériques de cadencement TCK, LCK émulant des signaux de synchronisation HSYNC, VSYNC internes au module. Les signaux de cadencement seront utilisés comme signaux d'horloges dont les cycles vont cadencer des incrémentations ou décrémentations de compteurs.

Ainsi le procédé comprend au moins un comptage 22, 23 de fronts, montant ou descendant, des signaux numériques de cadencement.

Dans cet exemple, ledit au moins un comptage de fronts des signaux de cadencement comprend un premier comptage 22 d'une quantité absolue CA de cycles d'au moins l'un desdits signaux de cadencement TCK, LCK. Le procédé selon cet exemple comprend également un deuxième comptage 23 d'une quantité relative CR de cycles d'au moins l'un desdits signaux de cadencement TCK, LCK.

Ensuite, lesdits signaux déclencheurs TTEVi sont générés 24 de façon conditionnée, c'est-à-dire lorsque des conditions sont remplies, sur les valeurs courantes desdits comptages 22, 23.

Les signaux numériques de cadencement TCK, LCK sont générés de façon à émuler des signaux de synchronisation internes au module électronique ME, afin de pouvoir élaborer les signaux déclencheurs optimisés pour un usage concret du module. Les signaux de synchronisation interne au module électronique sont généralement non-disponibles à l'extérieur du module, du moins pas tous disponibles à l'extérieur du module.

Les signaux numériques de cadencement TCK, LCK émulent les signaux de synchronisation horizontal HSYNC et/ou de synchronisation verticale VSYNC du module d'interface multimédia. Ces signaux sont respectivement représentatifs d'un début de trame d'image TCK (/VSYNC) et d'un début de ligne LCK (/HSYNC) d'une trame de l'image.

Dans le cadre des interfaces multimédia, une reproduction très rigoureuse des signaux de synchronisation internes du module électronique ME n'est pas nécessaire, et pas forcément souhaitable.

Cela étant, il s'avère avantageux d'éviter un déphasage entre les signaux de cadencement et l'état réel du module électronique.

Or, la plupart des modules d'interface multimédia ME prévoient de fournir au moins un signal de synchronisation TE avec lequel pourront être remis en phase les signaux de cadencement TCK, LCK. Typiquement au moins un signal d'effet de déchirure TE (usuellement « TE » pour « Tearing Effect » en anglais) est communiqué, généralement une fois par trame, par les modules du type interfaces multimédia.

Parfois les signaux de synchronisation horizontale HSYNC et/ou de synchronisation verticale VSYNC susmentionnés sont également disponibles. C'est notamment le cas lorsque l'interface multimédia est entièrement pilotée par un dispositif annexe, du type microcontrôleur.

Usuellement, les interfaces multimédia rendent disponibles à l'extérieure du module soit le signal de synchronisation horizontale HSYNC et le signal de synchronisation verticale VSYNC, soit un signal d'effet de déchirure TE.

Ainsi, le procédé peut être mis en œuvre de façon autonome, indépendamment du module électronique ME, mais peut également comprendre une réception d'un signal de synchronisation permettant de synchroniser les signaux de cadencement TCK, LCK.

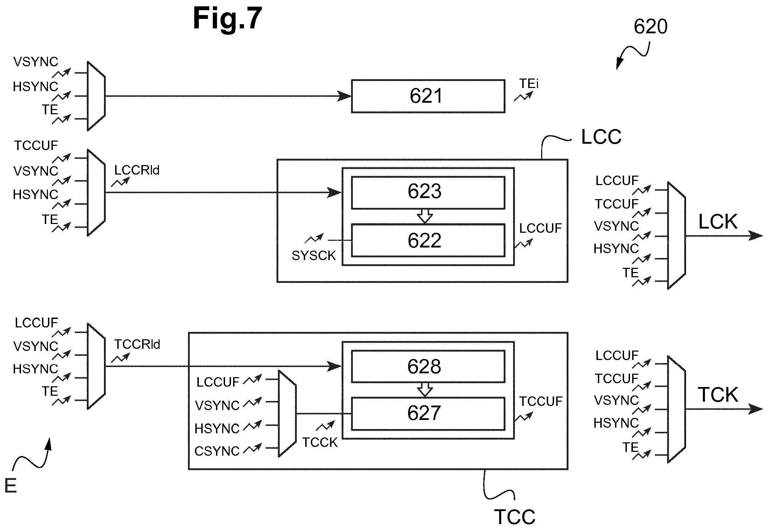

Par conséquent, le procédé comprend éventuellement une réception 20 d'au moins un signal de synchronisation VSYNC/HSYNC/TE interne au module électronique ME et provenant du module électronique ME. Dans cette éventualité, la génération des signaux numériques de cadencement TCK, LCK utilise alors cet au moins un signal de synchronisation VSYNC/HSYNC/TE. A cet égard, on se référera à la description donnée ci-après en relation avec la figure 7.

Bien entendu, qu'elle soit autonome ou qu'elle utilise un signal de synchronisation, la génération 21 des signaux de cadencement TCK, LCK doit être adaptée aux caractéristiques intrinsèques du module électronique ME.

Ainsi, pour pouvoir s'adapter à différentes technologies ou configurations de module électronique ME, la génération des signaux numériques de cadencement TCK, LCK est apte à être commandée, par une commande CONF, de façon à être adaptée à la reproduction des signaux de synchronisation donnés HSYNC, VSYNC, internes à un module électronique ME donné. Par exemple, la résolution d'une interface d'afficheur pouvant varier d'un dispositif à un autre, la commande CONF peut permettre de configurer les comptages en harmonie avec les caractéristiques intrinsèques du dispositif.

La commande CONF peut par exemple être générée par un utilisateur mettant en œuvre le procédé, ou bien par un fabricant fournissant le procédé.

Les signaux déclencheurs TTEVi sont générés 24 lorsque des conditions sont remplies sur les valeurs courantes CA, CR des comptages cadencés par ces signaux de cadencement TCK, LCK.

Par exemple, des conditions relativement simples telles que « atteindre un nombre N de trames consécutives traitées », ou « atteindre chaque portions 1/m d'une trames », c'est-à-dire toutes les L/m lignes d'une même trame (avec L le nombre de lignes par trame d'une image de l'interface multimédia IM et m un entier positif inférieur à L), peuvent permettre d'élaborer des signaux déclencheurs utiles.

Ainsi, un exemple de génération conditionnée par un comptage absolu 22 peut s'exprimer : « pour chaque trame, à la M-ième ligne, générer un signal déclencheur TTEVi ».

Un exemple de génération conditionnée par un comptage relatif 23 peut s'exprimer : « toute les K trames, générer un signal déclencheur TTEVi ».

En outre, ladite génération 24 des signaux déclencheurs TTEVi peut comprendre au moins une génération d'un signal déclencheur complexe à partir d'une combinaison de différents comptages parmi lesdits comptages 22, 23 des signaux de cadencement TCK, LCK.

Un exemple de génération d'un tel signal déclencheur complexe peut s'exprimer : « toute les K trames, générer un signal déclencheur TTEVi à la M-ième ligne de cette trame ».

Bien entendu, les exemples de formulation de conditions d'élaboration des signaux déclencheurs TTEVi à partir des signaux de cadencement TCK, LCK, ont été donnés ci-avant à titre illustratif, aucunement limitatif, et ne présentent pas nécessairement d'utilité pratique. L'homme du métier saura exprimer des conditions répondant à ses besoins.

La figure 3 représente un exemple de surveillance 30 d'une tâche graphique d'un module électronique d'interface multimédia ME.

La surveillance comprend une attente d'une réalisation de la tâche graphique RAF, et un chronométrage de l'attente cadencé par au moins l'un desdits signaux déclencheur TTEVj.

Au moins un signal de sécurité AR est généré si le chronométrage de l'attente a dépassé une valeur de référence respective.

Cet exemple de surveillance permet de prendre une mesure de sécurité supplémentaire et indépendante, notamment indépendante d'un microcontrôleur annexe. En effet, en particulier lorsque le module d'interface multimédia est un afficheur du type à diode électroluminescente organique « OLED », une absence de rafraîchissement de l'affichage pendent une durée trop longue peut endommager irréversiblement l'interface d'affichage OLED.

Ainsi, dans l'exemple d'un module d'interface multimédia du type afficheur OLED, l'événement résultant de la tâche graphique RAF peut avantageusement comprendre un signal représentatif d'un rafraîchissement de l'image.

La surveillance 30 d'une tâche graphique du module d'interface multimédia IM peut néanmoins être d'une autre nature, et s'appliquer à d'autres types de module électronique ME.

Cela étant des modes de mise en œuvre préférentiels de la surveillance 30 d'une tâche graphique du module d'interface multimédia ME sont décrits dans la demande de brevet Français ayant pour titre « Procédé de surveillance d'une tâche, en particulier une tâche graphique, pour un module électronique, en particulier d'interface multimédia, et dispositif correspondant », déposée au nom de la demanderesse le même jour que la présente demande de brevet.

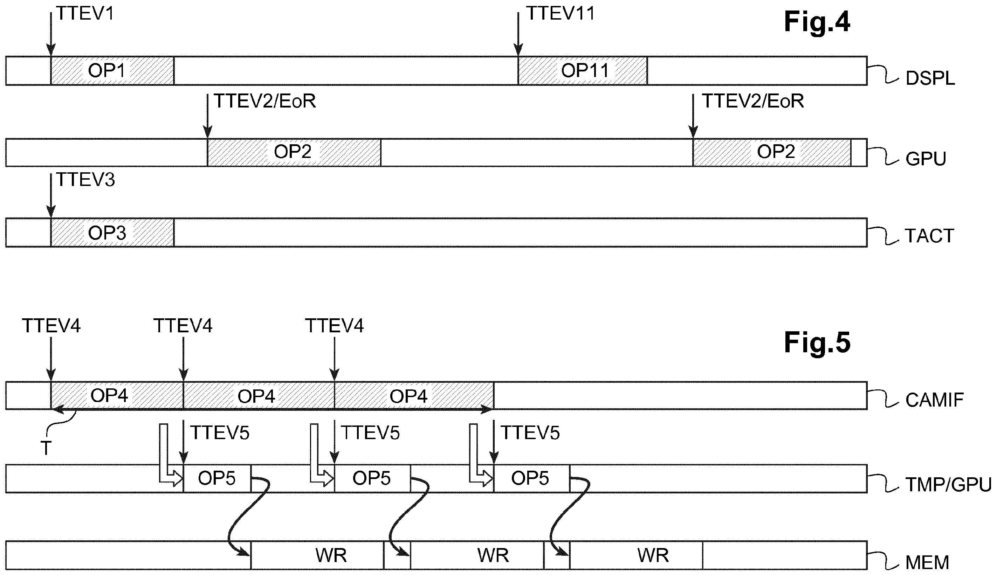

La figure 4 représente un exemple de méthode de commande d'un module électronique.

La méthode de commande du module électronique comprend un procédé d'élaboration de signaux déclencheurs TTEVi tel que décrit précédemment en relation avec la figure 2.

La méthode comprend des opérations de commande OPi (1≤i≤3) réalisées de façon indépendante et autonome à des moments respectivement commandés par lesdits signaux déclencheurs TTEVi (1≤i≤3 ici).

Dans l'exemple représenté par la figure 4, le module électronique est un module du type interface d'affichage DSPL, et les différentes opérations OPi (1≤i≤3) comprennent :
une opération de rafraîchissement OP1 de l'interface d'affichage DSPL à un moment commandé par un premier signal déclencheur TTEV1 ;
une opération de calcul graphique OP2 à un moment commandé par un deuxième signal déclencheur TTEV2 ;
une opération de lecture de coordonnées tactiles OP3 d'un contrôleur tactile TACT à un moment commandé par un troisième signal déclencheur TTEV3.

Eventuellement, l'opération de calcul graphique OP2 est commandée par un signal de fin de rafraichissement EoR, ou le deuxième signal déclencheur TTEV2 élaboré pour être généré à un moment équivalent.

On peut voir sur la représentation de la figue 4, éventuellement comparée avec la figure 1 précédemment décrite, que dans cet exemple, la lecture de coordonnées tactiles OP3 n'introduit pas d'interruption de la tâche graphique OP2. Ainsi, l'opération de rafraîchissement suivante OP11 n'est pas retardée et peut être exécutée au moment du prochain premier signal déclencheur TTEV11.

La figure 5 représente également un exemple de méthode de commande d'un module électronique comprenant un procédé d'élaboration de signaux déclencheurs TTEVi tel que décrit précédemment en relation avec la figure 2, et des opérations de commande OPi (1≤i≤3) réalisées de façon indépendante et autonome à des moments respectivement commandés par lesdits signaux déclencheurs TTEVi (1≤i≤3 ici).

Dans l'exemple représenté par la figure 5, le module électronique est un module du type interface de caméra CAMIF, c'est-à-dire une interface d'acquisition d'un flux d'images, et les différentes opérations OPi (1≤i≤3) comprennent :
une émission d'un flux sortant de données d'image OP4 à un moment commandé par un premier signal déclencheur TTEV4 ;
un traitement numérique d'un flux de données d'image OP5, à un moment commandé par un deuxième signal déclencheur TTEV5.

Sur l'exemple représenté par la figure 5, l'acquisition d'une image entière est réalisée au cours de la durée T hachurée du bloc temporel de l'interface de caméra CAMIF. Cet exemple propose de mettre en œuvre N fois une émission d'un flux sortant de données d'image OP4 au cours de l'acquisition d'une image complète (N=3 dans cet exemple). Seulement 1/N du volume des données de l'image est traité par une unité de traitement GPU à chaque opération de traitement numérique OP5. Pendant les opérations de traitement numérique OP5, les données sont temporairement stockées dans une mémoire tampon TMP. Par exemple, les opérations de traitement numérique OP5 peuvent être du type formatage et compression de données, ou un traitement d'image du type transformation ou amélioration d'un rendu.

Après chaque traitement numérique OP5, les données traitées sont écrites WR dans une mémoire non-volatile MEM.

Ainsi, cet exemple permet de diviser par N la taille de la mémoire tampon TMP utilisée lors des opérations de traitement numérique OP5.

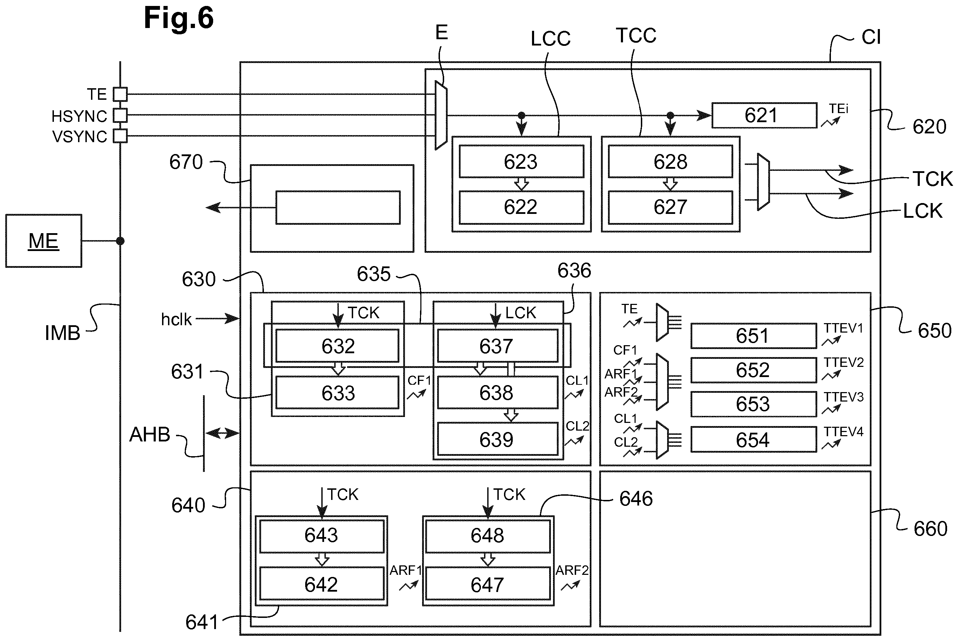

La figure 6 illustre un exemple de circuit intégré CI d'élaboration de signaux déclencheurs TTEVi (1≤i≤4) pour une commande de module électronique ME. Le circuit intégré CI peut par exemple être incorporé à un microcontrôleur ou à un système sur puce.

Le circuit intégré CI comprend un circuit générateur de signaux de cadencement 620, au moins un circuit de comptage 630, 640 et un circuit générateur de signaux déclencheurs 650.

Le circuit générateur de signaux de cadencement 620 est configuré pour générer des signaux numériques de cadencement TCK, LCK émulant des signaux de synchronisation HSYNC, VSYNC internes au module électronique ME et non-disponibles à l'extérieur du module ME.

Un premier circuit de comptage 630 est configuré pour compter des fronts des signaux de cadencement TCK, LCK de façon absolue. Un deuxième circuit de comptage 640 est configuré pour compter des fronts des signaux de cadencement TCK, LCK de façon relative. Le circuit générateur de signaux déclencheurs 650 est configuré pour générer les signaux déclencheurs TTEVi (1≤i≤4), à partir d'évènements respectifs 65i (1≤i≤4) conditionnés sur les valeurs courantes des circuits de comptage 630, 640.

Dans cet exemple, le circuit intégré CI comprend une entrée E recevant au moins un signal de synchronisation VSYNC, HSYNC, TE interne au module électronique et provenant du module électronique ME rendu disponible à l'extérieur du module via un bus IMB. Le circuit générateur de signaux de cadencement 620 peut être configuré pour générer les signaux numériques de cadencement TCK, LCK utilisant ledit au moins un signal de synchronisation VSYNC, HSYNC, TE. A cet égard, on se référera à la description donnée ci-après en relation avec la figure 7.

Le circuit générateur de signaux de cadencement 620 est configuré pour générer un signal de début de ligne LCK émulant un signal de synchronisation horizontale HSYNC interne au module d'interface multimédia et non-disponible à l'extérieur du module, et/ou un signal de début de trame TCK émulant un signal de synchronisation vertical VSYNC interne au module d'interface multimédia et non-disponible à l'extérieur du module.

Le signal de début de ligne LCK et le signal de début de trame TCK vont être transmis au premier circuit de comptage absolu 630 et au deuxième circuit de comptage relatif 640 afin de cadencer des éléments de comptage. Les valeurs courantes des circuits de comptages 630, 640 vont être utilisées par le circuit générateur de signaux déclencheurs 650 pour y tester des conditions 65i (1≤i≤4) représentatives d'événements utiles.

Dans l'exemple illustré par la figure 6, le premier circuit de comptage 630 comporte un compteur absolu de trames 631 et un compteur absolu de lignes 636.

Le compteur absolu de trames 631 comporte un élément compteur ascendant 632 sur 20 bits à fonctionnement libre. La valeur courante de l'élément compteur 632 est incrémentée à chaque front montant du signal de début de trame TCK.

Une valeur de comparaison est enregistrée dans un registre de comparaison 633, également sur 20 bits. Un événement CF1 est généré lorsque la valeur courante est égale à la valeur de comparaison.

Le compteur absolu de lignes 636 comporte un élément compteur ascendant 637 sur 12 bits à fonctionnement libre. La valeur courante de l'élément compteur 637 est incrémentée à chaque front montant du signal de début de ligne LCK.

Deux valeurs de comparaisons sont enregistrées dans des registres respectifs de comparaison 638, 639, également sur 12 bits. Des événements CL1, CL2 sont générés lorsque la valeur courante est égale à l'une des valeurs de comparaison.

Les compteurs absolus 631, 636 peuvent être commandés par des signaux d'activation et de réinitialisation habituels pouvant provenir d'éléments de contrôle matériels ou logiciels. En cas de sur-indexation du champ des compteurs 632, 637 les compteurs absolus 631, 636 génèrent un signal drapeau (« flag ») à destination des éléments de contrôle.

En outre, une valeur du temps absolu total sur 32 bits peut être lue directement dans un registre 635 comportant les 20 bits du compteur absolu de trames 631 comme bit de poids forts et les 12 bits du compteur absolu de lignes 636 comme bits de poids faibles.

Ainsi les différents comptages absolus du premier circuit de comptage 630 fournissent des signaux conditionnels CF1, CL1, CL2 pour générer des événements précis TTEVi.

Dans l'exemple illustré par la figure 6, le deuxième circuit de comptage 640 comporte deux compteurs relatifs de trames 641, 646.

Le deuxième circuit de comptage 640 relatif permet de générer des événements périodiques pour synchroniser les tâches graphiques avec des conditions établies au niveau des trames.

Les compteurs relatifs de trame 641, 646 comportent des éléments compteur descendant sur 12 bits 642, 647 à rechargement automatique. Les comptes des éléments compteurs 642, 647 sont décrémentés à chaque front montant du signal de début de trame TCK.

Les valeurs de départ des comptes respectifs sont automatiquement chargées à partir d'un registre de rechargement automatique AR respectif 643, 648. Lorsque les comptes respectifs sont décrémentés jusqu'à zéro, la valeur de départ est automatiquement rechargée et un signal de fin de décompte respectif ARF1, ARF2 est généré.

Les compteurs absolus 631, 636 peuvent être commandés par des signaux d'activation, d'attente et de réinitialisation habituels pouvant provenir d'éléments de contrôle matériels ou logiciels.

Par ailleurs, les valeurs des comptes relatifs instantanés peuvent être lues dans chaque compteur de trames 641, 646, directement dans le registre du compteur respectif 642, 647.

Les différentes signaux issus des comptes absolus CF1, CL1, CL2, et relatifs ARF1, ARF2 sont utilisés par le circuit générateur de signaux déclencheurs 650 pour générer les signaux déclencheurs TTEVi (1≤i≤4), à partir d'évènements respectifs 65i (1≤i≤4) conditionnés par lesdits signaux CF1, CL1, CL2 ARF1, ARF2.

Le circuit générateur de signaux déclencheurs 650 peut être configuré pour générer au moins un signal déclencheur complexe TTEVi à partir d'un évènement conditionné par une combinaison de conditions sur les valeurs courantes desdits circuits de comptages.

Le générateur d'événements peut combiner des événements sur les différentes conditions CF1, CL1, CL2 ARF1, ARF2. Par exemple jusqu'à 4 événements peuvent être combinés par des fonctions logiques usuelles (ET, OU, NON, etc).

Par ailleurs, le circuit intégré CI peut comporter une interface d'entrée-sortie sur un bus AHB du type architecture avancée de bus de microcontrôleurs, en particulier pour communiquer avec un microcontrôleur ou une unité de calcul graphiques. Par exemple, les signaux déclencheurs TTEVi peuvent être communiqués via le bus AHB. Le circuit intégré peut aussi comporter typiquement des registres de contrôle et de statuts 670, et une entrée d'horloge hclk fournissant la fréquence matérielle.

Le circuit générateur de signaux de synchronisation est avantageusement apte à être commandé dans une configuration adaptée à la reproduction de signaux de synchronisation donnés (HSYNC, VSYNC), internes à un module électronique donné, par exemple via une configuration provenant d'un microcontrôleur transmise sur un le bus AHB.

Préférentiellement, le bus AHB peut être du type architecture avancé de bus de périphérique, usuellement désigné par l'acronyme « APB » du terme anglais « Advanced Peripheral Bus ».

Ce circuit intégré est particulièrement adapté pour une commande de module électronique d'interface multimédia, telle qu'une interface d'affichage ou une interface de caméra

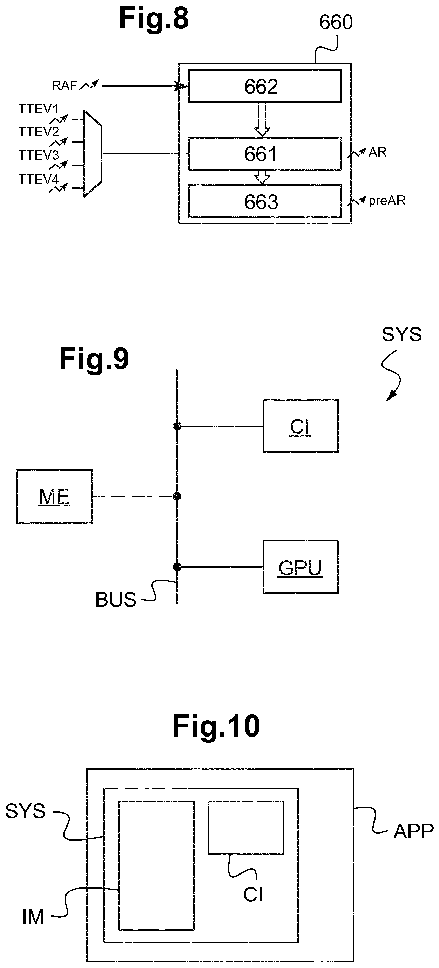

En outre, le circuit intégré CI peut comprendre un dispositif 660 de surveillance d'une tâche graphique du module d'interface multimédia, avantageusement une interface d'afficheur du type OLED. A cet égard, on se référera à la description donnée ci-après en relation avec la figure 8.

On se réfère désormais à la figure 7 pour traiter de la génération des signaux numériques de cadencement TCK, LCK par le circuit générateur de signaux de cadencement 620.

Le circuit de génération des signaux internes de cadencement 620 comprend un compteur de lignes LCC, un compteur de trames TCC et un détecteur 621 de signal d'effet de déchirure TE.

Le détecteur 621 de signal d'effet de déchirure est configuré pour détecter un signal d'effet de déchirure TE, par exemple en détectant un front montant ou un front descendant sur le signal TE, en fonction de la polarité employée, et pour générer un signal numérique interne TEi représentatif de cette détection.

Le compteur de lignes LCC comporte un élément compteur descendant sur 22 bits 622 à rechargement automatique 623. La valeur courante de l'élément compteur 622 est décrémentée à chaque front montant d'un signal d'horloge interne SYSCK. Le signal d'horloge interne SYSCK est par exemple le signal d'horloge hclk précédemment mentionné en relation avec la figure 6.

La valeur de départ du compteur est automatiquement chargée à partir d'un registre de rechargement automatique 623. Lorsque la valeur courante est décrémentée jusqu'à zéro, la valeur de départ est automatiquement rechargée, et un signal de fin décrémentation LCCUF est généré.

Néanmoins, un signal de rechargement forcé LCCRld peut permettre de recharger l'élément de comptage 622 à sa valeur de départ avant qu'il ait atteint zéro, sans générer le signal de fin de décrémentation LCCUF.

La valeur de départ du compteur de lignes LCC est choisie de façon à ce que, sur la fréquence du signal d'horloge interne SYSCK, le décompte atteigne zéro (et génère un drapeau (« flag ») LCCUF) au moment de chaque début de ligne du module.

Le compteur de trames TCC comporte un élément compteur descendant sur 12 bits 627 à rechargement automatique 628. La valeur courante de l'élément compteur 627 est décrémentée à chaque front montant d'un signal d'horloge du compteur de trames TCCK.

La valeur de départ du compteur est automatiquement chargée à partir d'un registre de rechargement automatique 628. Lorsque la valeur courante est décrémentée jusqu'à zéro, la valeur de départ est automatiquement rechargée, et un signal de fin décrémentation TCCUF est généré.

Néanmoins, un signal de rechargement forcé TCCRld peut permettre de recharger l'élément de comptage 627 à sa valeur de départ avant qu'il ait atteint zéro, sans générer le signal de fin de décrémentation TCCUF.

La valeur de départ du compteur de trames TCC est choisie de façon à ce que, cadencé par un signal représentatif d'un début de ligne LCCK, le décompte atteigne zéro, et génère un drapeau TCCUF, au moment de chaque début de trame du module.

On rappelle que dans l'exemple de la figure 6, le circuit CI comprend une entrée E destinée à recevoir au moins un signal de synchronisation VSYNC, HSYNC, TE interne au module électronique et provenant du module électronique. Et le circuit générateur de signaux de cadencement 620 est configuré pour générer les signaux numériques de cadencement TCK, LCK en utilisant ledit au moins un signal de synchronisation VSYNC, HSYNC, TE.

Dans le cadre d'un circuit intégré d'élaboration de signaux déclencheurs CI adapté pour une commande de module électronique d'interface multimédia, telle qu'une interface d'affichage ou une interface de caméra, on considère que les signaux de synchronisation internes au module et non-disponibles à l'extérieur du module peuvent être un signal de synchronisation verticale VSYNC, un signal de synchronisation horizontale HSYNC. Un signal de synchronisation externe TE du type « tearing effect » (effet de déchirure en français) peut éventuellement être disponible à l'extérieur du module.

On désignera dans la suite ces signaux de synchronisation directement par leurs références « VSYNC », « HSYNC ».

Cela étant, le circuit 620 générateur de signaux de cadencement TCK, LCK peut fonctionner selon différents modes :
- en mode autonome avec aucun signal de synchronisation disponible à l'extérieur du module ;
- avec HSYNC et VSYNC disponibles à l'extérieur du module ;
- avec uniquement HSYNC disponible à l'extérieur du module ;
- avec uniquement VSYNC disponible à l'extérieur du module ;
- avec uniquement CSYNC disponible à l'extérieur du module (CSYNC=HSYNC+VSYNC).comp

L'ensemble des exemples détaillés ci-dessous sont donnés à titre de référence, mais d'autres combinaisons sont bien entendu envisageables.

Dans le mode autonome, le circuit 620 génère les signaux numériques de cadencement TCK, LCK sans aucun signal externe.

Le compteur 622 est cadencé par signal d'horloge interne SYSCK et génère un drapeau LCCUF au moment de chaque début de ligne du module. Le drapeau LCCUF forme ainsi le signal de début de ligne LCK émulant le signal HSYNC non-disponible à l'extérieur du module.

Le drapeau LCCUF est utilisé comme signal d'horloge TCCK pour cadencer l'élément compteur 627 du compteur de trames TCC.

Le compteur 627 génère ainsi un drapeau TCCUF au moment de chaque début de trame du module. Le drapeau TCCUF forme ainsi le signal de début de trame TCK émulant le signal VSYNC non-disponible à l'extérieur du module.

Dans le mode avec HSYNC et VSYNC, le circuit 620 copie directement HSYNC comme signal de début de ligne LCK et VSYNC comme signal de début de trame TCK.

Dans le mode avec HSYNC uniquement, le circuit 620 génère les signaux de cadencement TCK, LCK en utilisant le signal HSYNC uniquement.

Le signal HSYNC est directement copié comme signal de début de ligne LCK.

Le signal HSYNC est utilisé comme signal d'horloge TCCK pour cadencer l'élément compteur 627 du compteur de trames LCC. Le drapeau TCCUF forme ainsi le signal de début de trame TCK émulant le signal VSYNC non-disponible à l'extérieur du module.

Dans le mode avec VSYNC uniquement, le circuit 620 génère les signaux de cadencement TCK, LCK en utilisant le signal VSYNC uniquement.

Le signal VSYNC est directement copié comme signal de début de trame TCK.

L'élément compteur 622 est cadencé par signal d'horloge interne SYSCK. Le drapeau LCCUF forme ainsi le signal de début de ligne LCK émulant le signal HSYNC non-disponible à l'extérieur du module.

Le signal VSYNC est aussi utilisé comme signal de rechargement forcé LCCRld pour le compteur de lignes LCC. Ainsi le signal de début de ligne LCK est resynchronisé avec chaque début de trame VSYNC.

Dans le mode CSYNC uniquement, le circuit 620 génère les signaux de cadencement TCK, LCK en utilisant le signal CSYNC uniquement, le signal CSYNC étant un signal comprenant la somme des deux signaux HSYNC et VSYNC. On considère que le signal CSYNC est transmis sur la borne « TE ».

Le compteur 322 est cadencé par signal d'horloge interne SYSCK et génère un drapeau LCCUF lorsqu'il arrive à la fin de son décompte (zéro).

Le signal CSYNC est utilisé comme signal de rechargement forcé LCCRld pour le compteur de lignes LCC. Le compteur de ligne est ainsi rechargé à chaque impulsion de la composante HSYNC du signal CSYNC, et ne génère pas de drapeau LCCUF à ces moments.

Le compteur de ligne LCC n'est cependant pas rechargé par les impulsions de la composante VSYNC du signal CSYNC, car la composante VSYNC est invariante pendant une durée plus longue que le comptage d'une ligne. Pendant l'impulsion de la composante VSYNC du signal CSYNC, le compteur de lignes LCC génère alors un signal drapeau de fin de décrémentation LCCUF émulant une impulsion du signal HSYNC non-disponible à l'extérieur du module, et le signal CSYNC est directement copié comme signal de début de ligne LCK.

Le drapeau LCCUF forme aussi le signal de début de trame TCK émulant le signal VSYNC non-disponible à l'extérieur du module.

La figure 8 illustre un exemple de dispositif 660 de surveillance d'une tâche graphique RAF d'un module d'interface multimédia ME.

Le dispositif de surveillance 660 est configuré pour attendre une réalisation de la tâche graphique RAF, chronométrer l'attente de façon cadencée par au moins l'un desdits signaux déclencheur TTEVi, et générer au moins un signal de sécurité AR si le chronométrage de l'attente a dépassé une valeur de référence respective.

A cet égard, le dispositif de surveillance 660 comporte un élément compteur descendant sur 16 bits 661 à rechargement automatique 662. La valeur courante de l'élément compteur 661 est décrémentée de façon cadencée par un signal déclencheur TTEVi dédié.

La valeur de départ du compteur est automatiquement chargée à partir d'un registre de rechargement automatique 662. Lorsque la valeur courante est décrémentée jusqu'à zéro, la valeur de départ est automatiquement rechargée, et un signal de fin décrémentation faisant office de signal de sécurité AR est généré.

Néanmoins, un signal de rechargement forcé peut permettre de recharger l'élément de comptage 661 à sa valeur de départ avant qu'il ait atteint zéro, sans générer le signal de fin de décrémentation AR. Le signal RAF représentatif de la réalisation de la tâche graphique est utilisé comme signal de rechargement forcé.

Le dispositif de surveillance peut comporter accessoirement un comparateur 663 configuré pour comparer la valeur courante de l'élément compteur 661 avec au moins une autre valeur de référence enregistrée dans un registre. Lorsque le décompte atteint ladite au moins une autre valeur de référence, au moins un signal d'alerte préliminaire preAR respectif est généré, par exemple afin de signaler l'approche d'une situation dangereuse.

Le dispositif de surveillance 660 est particulièrement adapté lorsque le module d'interface multimédia est un module d'affichage du type « OLED » à diodes électroluminescentes organiques. En effet, une absence de rafraîchissement de l'affichage pendent une durée trop longue peut endommager irréversiblement l'interface OLED.

Ainsi, l'événement résultant de la tâche graphique peut avantageusement comprendre un signal RAF représentatif d'un rafraîchissement de l'image.

Des modes de réalisation préférentiels du dispositif 660 de surveillance d'une tâche graphique du module d'interface multimédia IM sont décrits dans la demande de brevet Français ayant pour titre « Procédé de surveillance d'une tâche, en particulier une tâche graphique, pour un module électronique, en particulier d'interface multimédia, et dispositif correspondant », déposée au nom de la demanderesse le même jour que la présente demande de brevet.

La figure 9 représente un système de commande de module électronique ME, comprenant un module électronique ME tel qu'un module d'interface multimédia IM, un circuit intégré d'élaboration de signaux déclencheurs CI du type du circuit intégré décrit précédemment en relation avec les figures 6 à 8, et une unité de calculs GPU.

Le module d'interface multimédia ME peut être configuré pour fournir au moins un signal de synchronisation sur l'entrée du circuit intégré d'élaboration de signaux déclencheurs CI, via un bus de données BUS. Dans cette représentation, le bus BUS peut comprendre le bus IMB et le bus AHB décrits précédemment en relation avec la figure 7.

L'unité de calcul GPU est configurée pour réaliser de façon indépendante et autonome des opérations de commande à des moments respectivement commandés par lesdits signaux déclencheurs.

Il est à nouveau fait référence à la figure 5, ici en relation avec le système SYS dans lequel le module électronique ME est un module du type interface d'affichage DSPL.

L'unité de calcul GPU est configurée pour réaliser au moins l'une des opérations de commande suivantes :
des opérations de rafraîchissement OP1, OP11 de l'interface d'affichage DSPL à des moments commandés par des premiers signaux déclencheurs respectifs TTEV1, TTEV11 ;
une opération de calcul graphique OP2 à un moment commandé par un deuxième signal déclencheur TTEV2 ;
une opération de lecture de coordonnées tactiles OP3 d'un contrôleur tactile TACT appartenant au système, à un moment commandé par un troisième signal déclencheur TTEV3.

Il est désormais fait référence à la figure 6, ici en relation avec le système SYS dans lequel le module électronique ME est un module du type interface de caméra CAMIF.

L'unité de calcul GPU est configurée pour réaliser au moins l'une des opérations graphiques suivantes :
une opération d'émission d'un flux sortant de données d'image OP4 à un moment commandé par un premier signal déclencheur TTEV4 ;
une opération de traitement numérique d'un flux de données d'image OP5, tel qu'une compression des données, à un moment commandé par un deuxième signal déclencheur TTEV5.

La figure 10 représente un appareil électronique APP, tel qu'une montre connectée, un téléphone intelligent ou une caméra vidéo. L'appareil électronique APP comporte un système SYS tel que décrit précédemment en relation avec la figure 9. Le système SYS comporte ainsi notamment un circuit intégré générateur de signaux déclencheurs CI, par exemple incorporé à un système sur puce muni notamment d'une unité de calcul par exemple sous la forme d'un microcontrôleur, ainsi qu'une interface multimédia IM, telle qu'un afficheur ou un capteur de caméra.

Par ailleurs, l'invention n'est pas limitée à ces modes de réalisation mais en embrasse toutes les variantes, par exemple, il est réitéré que, bien qu'ait été accentué l'exemple d'un module d'interface multimédia, les modes de réalisation et de mise en œuvre s'appliquent à la commande de tout type de module électronique pouvant avoir plusieurs points de synchronisation.

L'invention embrasse également un procédé comprenant une génération à l'extérieur d'un module électronique ME d'au moins un signal numérique de cadencement LCK, TCK émulant au moins un premier signal de synchronisation HSYNC, VSYNC interne au module et non-disponible à l'extérieur du module, en tant que tel. Un circuit intégré correspondant est décrit ci-avant en relation avec la figure 7 selon un mode de réalisation particulier.

La génération dudit au moins un signal de cadencement LCK, TCK peut comprendre une division de la fréquence d'un signal numérique d'horloge élémentaire SYSCK, TCCK. Bien entendu, la génération des signaux de cadencement TCK, LCK peut être paramétrable en fonction de caractéristiques intrinsèques du module ME. En présence d'un deuxième signal de synchronisation HSYNC, VSYNC, TE provenant du module et disponible à l'extérieur du module, la génération dudit au moins un signal de cadencement LCK, TCK émulant ledit au moins un premier signal peut avantageusement utiliser le deuxième signal. Par exemple, le deuxième signal HSYNC est utilisé en tant que signal numérique d'horloge élémentaire TCCK, ou bien le deuxième signal VSYNC est utilisé pour réinitialiser une phase du signal de cadencement issu du signal numérique d'horloge élémentaire SYSCK divisé en fréquence.

## Revendications

1. Procédé de commande d'un module électronique d'interface multimédia (IM), tel qu'une interface d'affichage ou une interface de caméra, comprenant :
- une génération à l'extérieur d'un module électronique (ME) d'au moins un signal numérique de cadencement (LCK, TCK) émulant au moins un premier signal de synchronisation (HSYNC, VSYNC) interne au module et non-disponible à l'extérieur du module, qui, en présence d'un deuxième signal de synchronisation (HSYNC, VSYNC, TE) provenant du module et disponible à l'extérieur du module, utilise le deuxième signal ; ledit au moins un signal de cadencement (TCK, LCK) comprenant un signal de début de ligne (LCK) émulant un signal de synchronisation horizontale (HSYNC) du module d'interface multimédia (IM), et/ou un signal de début de trame (TCK) émulant un signal de synchronisation vertical (VSYNC) du module d'interface multimédia (IM) ;
- une élaboration de signaux déclencheurs (TTEVi) pour une commande externe du module (ME), comprenant au moins un comptage (22, 23) de fronts des signaux de cadencement, et une génération (24) desdits signaux déclencheurs (TTEVi) conditionnée sur les valeurs courantes dudit au moins un comptage ;
le procédé de commande comprenant des opérations de commande (OPi) réalisées de façon indépendante et autonome à des moments respectivement déclenchés par lesdits signaux déclencheurs (TTEVi).

2. Procédé selon la revendication 1, dans lequel ladite génération dudit au moins un signal de cadencement (LCK, TCK) comprend une division de la fréquence d'un signal numérique d'horloge élémentaire (SYSCK, TCCK).

3. Procédé selon la revendication 2, dans lequel la génération dudit au moins un signal de cadencement (TCK) émulant ledit au moins un premier signal utilise le deuxième signal (HSYNC) en tant que signal numérique d'horloge élémentaire (TCCK).

4. Procédé selon la revendication 2, dans lequel la génération dudit au moins un signal de cadencement (LCK) émulant ledit au moins un premier signal utilise le deuxième signal (VSYNC) pour réinitialiser une phase dudit signal de cadencement issu de ladite division de la fréquence du signal numérique d'horloge élémentaire (SYSCK).

5. Procédé selon l'une des revendications précédentes, dans lequel la génération des signaux de cadencement (TCK, LCK) est paramétrable en fonction de caractéristiques intrinsèques du module (ME).

6. Procédé selon l'une des revendications précédentes, dans lequel ledit au moins un comptage (22, 23) des fronts des signaux de cadencement comprend plusieurs comptages des fronts des signaux de cadencement, et ladite génération (24) des signaux déclencheurs (TTEVi) comprend au moins une génération d'un signal déclencheur complexe conditionnée par une combinaison de conditions sur différentes valeurs courantes desdits comptages (22, 23).

7. Procédé selon l'une des revendications précédentes, comprenant en outre une surveillance (30) d'une tâche graphique dudit module d'interface multimédia (ME), comprenant une attente d'une réalisation de la tâche graphique (RAF), un chronométrage de l'attente cadencé par au moins l'un desdits signaux déclencheur (TTEVj), et une au moins une génération d'un signal de sécurité (AR) si le chronométrage de l'attente a dépassé une valeur de référence.

8. Procédé selon l'une des revendications précédentes, le module électronique étant un module d'interface d'affichage (DSPL), dans lequel lesdites opérations (OPi) comprennent au moins l'une des opérations suivantes :
- une opération de rafraîchissement (OP1) de l'interface d'affichage (DSPL) à un moment commandé par un premier signal déclencheur (TTEV1) ;
- une opération de calcul graphique (OP2) à un moment commandé par un deuxième signal déclencheur (TTEV2) ;
- une opération de lecture de coordonnées tactiles (OP3) d'un contrôleur tactile (TACT) à un moment commandé par un troisième signal déclencheur (TTEV3).

9. Procédé selon l'une des revendications précédentes, le module électronique étant un module du type interface de caméra (CAMIF), dans lequel lesdites opérations (OPi) comprennent au moins l'une des opérations graphiques suivantes :
- une émission d'un flux sortant de données d'image (OP4) à un moment commandé par un premier signal déclencheur (TTEV4) ;
- un traitement numérique d'un flux de données d'image (OP5), tel qu'une compression des données, à un moment commandé par un deuxième signal déclencheur (TTEV5).

10. Système de commande d'un module électronique d'interface multimédia (IM), telle qu'une interface d'affichage (DSPL) ou une interface de caméra (CAMIF), comprenant le module électronique (ME) et comportant :
- un générateur de signaux de cadencements (620) configuré pour générer à l'extérieur d'un module électronique (ME) au moins un signal numérique de cadencement (LCK, TCK) émulant au moins un premier signal de synchronisation (HSYNC, VSYNC) interne au module et non-disponible à l'extérieur du module, et, en présence d'un deuxième signal de synchronisation (VSYNC, HSYNC, TE) provenant du module et disponible à l'extérieur du module, pour générer ledit au moins un signal de cadencement (LCK, LCK) émulant ledit au moins un premier signal en utilisant le deuxième signal ; ledit au moins un signal de cadencement (TCK, LCK) comprenant un signal de début de ligne (LCK) émulant un signal de synchronisation horizontale (HSYNC) du module d'interface multimédia (IM), et/ou un signal de début de trame (TCK) émulant un signal de synchronisation vertical (VSYNC) du module d'interface multimédia (IM)
- un circuit d'élaboration de signaux déclencheurs (CI) pour une commande externe du module (ME), comprenant au moins un circuit de comptage (630, 640) configuré pour compter des fronts des signaux de cadencement, et un circuit générateur de signaux déclencheurs (650) configuré pour générer les signaux déclencheurs (TTEVi) de façon conditionnée sur les valeurs courantes dudit au moins un circuit de comptage (630, 640) ;
le système comprenant une unité de calcul (GPU) configurée pour réaliser de façon indépendante et autonome des opérations de commande (OPi) à des moments respectivement déclenchés par lesdits signaux déclencheurs (TTEVi).

11. Système selon la revendication 10, dans lequel ledit générateur de signaux de cadencements (620) comprend un diviseur de fréquence (LCC, TCC) configuré pour diviser la fréquence d'un signal numérique d'horloge élémentaire (SYSCK, TCCK), pour générer ledit au moins un signal de cadencement (LCK, TCK).

12. Système selon la revendication 11, dans lequel le générateur de signaux de cadencements (620) est configuré pour générer ledit au moins un signal de cadencement (TCK) émulant ledit au moins un premier signal en utilisant le deuxième signal (HSYNC) en tant que signal numérique d'horloge élémentaire (TCCK).

13. Système selon la revendication 11, dans lequel le générateur de signaux de cadencements (620) est configuré pour générer ledit au moins un signal de cadencement (LCK) émulant ledit au moins un premier signal en utilisant le deuxième signal (VSYNC) pour réinitialiser une phase dudit signal de cadencement issu de la division de la fréquence du signal numérique d'horloge élémentaire (SYSCK) par le diviseur de fréquence (LCC).

14. Système selon l'une des revendications 10 à 13, dans lequel le générateur de signaux de cadencement (620) est paramétrable en fonction de caractéristiques intrinsèques du module (ME).

15. Système selon l'une des revendications 10 à 14, dans lequel dans lequel ledit au moins un circuit de comptage (630, 640) comprend plusieurs circuits de comptages, et ledit circuit générateur de signaux déclencheurs (650) est configuré pour générer au moins un signal déclencheur complexe (TTEVi) de façon conditionnée par une combinaison de conditions sur différentes valeurs courantes desdits circuits de comptages (630, 640).

16. Système selon l'une des revendications 10 à 15, comprenant en outre un dispositif de surveillance d'une tâche graphique (660) dudit module d'interface multimédia (IM), configuré pour attendre une réalisation de la tâche graphique (RAF), chronométrer l'attente de façon cadencée par au moins l'un desdits signaux déclencheur (TTEVi), et générer au moins un signal de sécurité (AR, preAR) si le chronométrage de l'attente a dépassé une valeur de référence respective.

17. Système selon l'une des revendications 10 à 16, incorporé à un microcontrôleur ou à un système sur puce.

18. Système selon l'une des revendications 10 à 17, dans lequel le module électronique est un module d'interface d'affichage (DSPL) et l'unité de calcul (GPU) est configurée pour réaliser au moins l'une des opérations de commande suivantes :
- une opération de rafraîchissement (OP1) de l'interface d'affichage (DSPL) à un moment commandé par un premier signal déclencheur (TTEV1) ;
- une opération de calcul graphique (OP2) à un moment commandé par un deuxième signal déclencheur (TTEV2) ;
- une opération de lecture de coordonnées tactiles (OP3) d'un contrôleur tactile (TACT) appartenant au système, à un moment commandé par un troisième signal déclencheur (TTEV3).

19. Système selon l'une des revendications 10 à 17, dans lequel le module électronique est un module d'interface de caméra (CAMIF) et l'unité de calcul (GPU) est configurée pour réaliser au moins l'une des opérations de commande suivantes :
- une opération d'émission d'un flux sortant de données d'image (OP4) à un moment commandé par un premier signal déclencheur (TTEV4) ;
- une opération de traitement numérique d'un flux de données d'image (OPS), tel qu'une compression des données, à un moment commandé par un deuxième signal déclencheur (TTEV5).

20. Appareil électronique (APP), tel qu'une montre connectée ou une caméra vidéo, comportant un système (SYS) selon l'une des revendications 10 à 19.

## Patentansprüche

1. Verfahren zur Steuerung eines elektronischen Multimedia-Schnittstellenmoduls (IM), wie etwa einer Anzeigeschnittstelle oder einer Kameraschnittstelle, umfassend:
- Erzeugen, außerhalb eines elektronischen Moduls (ME), von mindestens einem digitalen Taktsignal (LCK, TCK), das mindestens ein erstes Synchronisationssignal (HSYNC, VSYNC) emuliert, das innerhalb des Moduls und außerhalb des Moduls nicht verfügbar ist, und das bei Vorhandensein eines zweiten Synchronisationssignals (HSYNC, VSYNC, TE), das von dem Modul kommt und außerhalb des Moduls verfügbar ist, das zweite Signal verwendet; wobei das mindestens eine Taktsignal (TCK, LCK) ein Zeilenanfangssignal (LCK) umfasst, das ein horizontales Synchronisationssignal (HSYNC) des Multimedia-Schnittstellenmoduls (IM) emuliert, und/oder ein Rahmenanfangssignal (TCK), das ein vertikales Synchronisationssignal (VSYNC) des Multimedia-Schnittstellenmoduls (IM) emuliert;
- Erstellen von Auslösesignalen (TTEVi) für eine externe Steuerung des Moduls (ME), umfassend mindestens eine Zählung (22, 23) von Flanken der Taktsignale, und Erzeugen (24) der Auslösesignale (TTEVi), das auf die aktuellen Werte der mindestens einen Zählung bedingt ist;
wobei das Steuerungsverfahren unabhängig und autark ausgeführte Steuerungsvorgänge (OPi) zu jeweils von den Auslösesignalen (TTEVi) ausgelösten Zeitpunkten umfasst.

2. Verfahren nach Anspruch 1, wobei das Erzeugen des mindestens einen Taktsignals (LCK, TCK) eine Teilung der Frequenz eines elementaren digitalen Taktsignals (SYSCK, TCCK) umfasst.

3. Verfahren nach Anspruch 2, wobei das Erzeugen des mindestens einen Taktsignals (TCK), das das mindestens eine erste Signal emuliert, das zweite Signal (HSYNC) als elementares digitales Taktsignal (TCCK) verwendet.

4. Verfahren nach Anspruch 2, wobei das Erzeugen des mindestens einen Taktsignals (LCK), das das mindestens eine erste Signal emuliert, das zweite Signal (VSYNC) verwendet, um eine Phase des Taktsignals zurückzusetzen, die aus der Teilung der Frequenz des elementaren digitalen Taktsignals (SYSCK) stammt.

5. Verfahren nach einem der vorhergehenden Ansprüche, wobei das Erzeugen der Taktsignale (TCK, LCK) in Abhängigkeit von intrinsischen Merkmalen des Moduls (ME) parametrierbar ist.

6. Verfahren nach einem der vorhergehenden Ansprüche, wobei die mindestens eine Zählung (22, 23) der Flanken der Taktsignale mehrere Zählungen der Flanken der Taktsignale umfasst, und das Erzeugen (24) der Auslösesignale (TTEVi) mindestens das Erzeugen eines komplexen Auslösesignals umfasst, das durch eine Kombination von Bedingungen für verschiedene aktuelle Werte der Zählungen (22, 23) bedingt ist.

7. Verfahren nach einem der vorhergehenden Ansprüche, ferner umfassend das Überwachen (30) einer grafischen Aufgabe des Multimedia-Schnittstellenmoduls (ME), umfassend die das Warten auf eine Durchführung der grafischen Aufgabe (RAF), eine durch mindestens eines der Auslösesignale (TTEVj) getaktete Zeitmessung des Wartens und das mindestens eine Erzeugen eines Sicherheitssignals (AR), wenn die Zeitmessung des Wartens einen Referenzwert überschritten hat.

8. Verfahren nach einem der vorhergehenden Ansprüche, wobei das elektronische Modul ein Anzeigeschnittstellenmodul (DSPL) ist, wobei die Vorgänge (OPi) mindestens einen der folgenden Vorgänge umfassen:
- einen Aktualisierungsvorgang (OP1) der Anzeigeschnittstelle (DSPL) zu einem Zeitpunkt, der durch ein erstes Auslösesignal (TTEV1) gesteuert wird;
- einen grafischen Berechnungsvorgang (OP2) zu einem Zeitpunkt, der durch ein zweites Auslösesignal (TTEV2) gesteuert wird;
- einen taktilen Koordinatenlesevorgang (OP3) eines taktilen Controllers (TACT) zu einem Zeitpunkt, der durch ein drittes Auslösesignal (TTEV3) gesteuert wird.

9. Verfahren nach einem der vorhergehenden Ansprüche, wobei das elektronische Modul ein Modul des Typs Kameraschnittstelle (CAMIF) ist, wobei die Vorgänge (OPi) mindestens einen der folgenden grafischen Vorgänge umfassen:
- Senden eines ausgehenden Bilddatenstroms (OP4) zu einem Zeitpunkt, der durch ein erstes Auslösesignal (TTEV4) gesteuert wird;
- digitales Verarbeiten eines Bilddatenstroms (OP5), wie eine Datenkomprimierung, zu einem Zeitpunkt, der durch ein zweites Auslösesignal (TTEV5) gesteuert wird.

10. Steuerungssystem für ein elektronisches Multimedia-Schnittstellenmodul (IM), wie etwa eine Anzeigeschnittstelle (DSPL) oder eine Kameraschnittstelle (CAMIF), umfassend das elektronische Modul (ME) und umfassend:
- einen Taktsignalgenerator (620), der so eingerichtet ist, dass er außerhalb eines elektronischen Moduls (ME) mindestens ein digitales Taktsignal (LCK, TCK) erzeugt, das mindestens ein erstes Synchronisationssignal (HSYNC, VSYNC) emuliert, das innerhalb des Moduls und außerhalb des Moduls nicht verfügbar ist, und, bei Vorhandensein eines zweiten Synchronisationssignals (VSYNC, HSYNC, TE), das von dem Modul kommt und außerhalb des Moduls verfügbar ist, um das mindestens eine Taktsignal (LCK, LCK) Emulieren des mindestens ersten Signals unter Verwendung des zweiten Signals emuliert; wobei das mindestens eine Taktsignal (TCK, LCK) ein Zeilenanfangssignal (LCK) umfasst, das ein horizontales Synchronisationssignal (HSYNC) des Multimedia-Schnittstellenmoduls (IM) emuliert, und/oder ein Rahmenanfangssignal (TCK), das ein vertikales Synchronisationssignal (VSYNC) des Multimedia-Schnittstellenmoduls (IM) emuliert;
- eine Schaltung zur Erstellung von Auslösesignalen (CI) für eine externe Steuerung des Moduls (ME), umfassend mindestens eine Zählschaltung (630, 640), die so eingerichtet ist, dass sie Flanken der Taktsignale zählt, und eine Schaltung zur Erzeugung von Auslösesignalen (650), die so eingerichtet ist, dass sie die Auslösesignale (TTEVi), bedingt an den aktuellen Werten der mindestens einen Zählschaltung (630, 640), erzeugt;
wobei das System eine Recheneinheit (GPU) umfasst, die so eingerichtet ist, dass sie unabhängig und autonom Steuervorgänge (OPi) zu jeweils durch die Auslösesignale (TTEVi) ausgelösten Zeitpunkten durchführt.

11. System nach Anspruch 10, wobei der Taktsignalgenerator (620) einen Frequenzteiler (LCC, TCC) umfasst, der so eingerichtet ist, dass er die Frequenz eines elementaren digitalen Taktsignals (SYSCK, TCCK) teilt, um das mindestens eine Taktsignal (LCK, TCK) zu erzeugen.

12. System nach Anspruch 11, wobei der Taktsignalgenerator (620) so eingerichtet ist, dass er das mindestens eine Taktsignal (TCK) erzeugt, das das mindestens eine erste Signal unter Verwendung des zweiten Signals (HSYNC) als elementares digitales Taktsignal (TCCK) emuliert.

13. System nach Anspruch 11, wobei der Taktsignalgenerator (620) so eingerichtet ist, dass er das mindestens eine Taktsignal (LCK) erzeugt, das das mindestens eine erste Signal emuliert, indem er das zweite Signal (VSYNC) verwendet, um eine Phase des Taktsignals zurückzusetzen, die aus der Teilung der Frequenz des elementaren digitalen Taktsignals (SYSCK) durch den Frequenzteiler (LCC) stammt.

14. System nach einem der Ansprüche 10 bis 13, wobei der Taktsignalgenerator (620) in Abhängigkeit von intrinsischen Merkmalen des Moduls (ME) parametrierbar ist.

15. System nach einem der Ansprüche 10 bis 14, wobei die mindestens eine Zählschaltung (630, 640) mehrere Zählschaltungen umfasst, und die Schaltung zur Erzeugung von Auslösesignalen (650) so eingerichtet ist, dass sie mindestens ein komplexes Auslösesignal (TTEVi), bedingt durch eine Kombination von Bedingungen für verschiedene aktuelle Werte der Zählschaltungen (630, 640), erzeugt.

16. System nach einem der Ansprüche 10 bis 15, ferner umfassend eine Vorrichtung zur Überwachung einer grafischen Aufgabe (660) des Multimedia-Schnittstellenmoduls (IM), die so eingerichtet ist, dass sie auf eine Durchführung der grafischen Aufgabe (RAF) wartet, das Warten durch mindestens eines der Auslösesignale (TTEVi) getaktet misst und mindestens ein Sicherheitssignal (AR, preAR) erzeugt, wenn die Zeitmessung des Wartens einen jeweiligen Referenzwert überschritten hat.

17. System nach einem der Ansprüche 10 bis 16, das integriert in einen Mikrocontroller oder in ein System-on-Chip eingebaut ist.

18. System nach einem der Ansprüche 10 bis 17, wobei das elektronische Modul ein Anzeigeschnittstellenmodul (DSPL) ist und die Recheneinheit (GPU) so eingerichtet ist, dass sie mindestens einen der folgenden Steuervorgänge durchführt:
- einen Aktualisierungsvorgang (OP1) der Anzeigeschnittstelle (DSPL) zu einem Zeitpunkt, der durch ein erstes Auslösesignal (TTEV1) gesteuert wird;
- einen grafischen Berechnungsvorgang (OP2) zu einem Zeitpunkt, der durch ein zweites Auslösesignal (TTEV2) gesteuert wird;
- einen taktilen Koordinatenlesevorgang (OP3) eines taktilen Controllers (TACT), der zu dem System gehört, zu einem Zeitpunkt, der durch ein drittes Auslösesignal (TTEV3) gesteuert wird.

19. System nach einem der Ansprüche 10 bis 17, wobei das elektronische Modul ein Kameraschnittstellenmodul (CAMIF) ist und die Recheneinheit (GPU) so eingerichtet ist, dass sie mindestens einen der folgenden Steuervorgänge durchführt:
- einen Vorgang zum Senden eines ausgehenden Bilddatenstroms (OP4) zu einem Zeitpunkt, der durch ein erstes Auslösesignal (TTEV4) gesteuert wird;
- einen digitalen Verarbeitungsvorgang eines Bilddatenstroms (OP5), wie eine Datenkomprimierung, zu einem Zeitpunkt, der durch ein zweites Auslösesignal (TTEV5) gesteuert wird.

20. Elektronisches Gerät (APP), wie eine Smartwatch oder eine Videokamera, mit einem System (SYS) nach einem der Ansprüche 10 bis 19.

## Claims

1. Method for controlling an electronic multimedia interface (IM) module, such as a display interface or a camera interface, comprising:
- generating outside an electronic module (ME) at least one digital timing signal (LCK, TCK) emulating at least one first synchronization signal (HSYNC, VSYNC) internal to the module and not available outside the module, which, in the presence of a second synchronization signal (HSYNC, VSYNC, TE) coming from the module and available outside the module, uses the second signal; said at least one timing signal (TCK, LCK) comprising a line start signal (LCK) emulating a horizontal synchronization signal (HSYNC) of the multimedia interface (IM) module, and/or a frame start signal (TCK) emulating a vertical synchronization signal (VSYNC) of the multimedia interface (IM) module;
- developing trigger signals (TTEVi) for external control of the module (ME), comprising at least one count (22, 23) of edges of the timing signals, and generating (24) said trigger signals (TTEVi) conditioned on the current values of said at least one count;
the control method comprising control operations (OPi) performed independently and autonomously at times respectively triggered by said trigger signals (TTEVi).

2. Method according to Claim 1, wherein said generation of said at least one timing signal (LCK, TCK) comprises dividing the frequency of an elementary digital clock signal (SYSCK, TCCK).

3. Method according to Claim 2, wherein generating said at least one timing signal (TCK) emulating said at least one first signal uses the second signal (HSYNC) as an elementary digital clock signal (TCCK).

4. Method according to Claim 2, wherein generating said at least one timing signal (LCK) emulating said at least one first signal uses the second signal (VSYNC) to reset a phase of said timing signal derived from said division of the frequency of the elementary digital clock signal (SYSCK) .

5. Method according to one of the preceding claims, wherein the generation of the timing signals (TCK, LCK) is configurable according to intrinsic characteristics of the module (ME).

6. Method according to one of the preceding claims, wherein said at least one count (22, 23) of the edges of the timing signals comprises a plurality of counts of the edges of the timing signals, and said generation (24) of the trigger signals (TTEVi) comprises at least one generation of a complex trigger signal conditioned by a combination of conditions on different current values of said counts (22, 23).

7. Method according to one of the preceding claims, further comprising monitoring (30) a graphical task of said multimedia interface module (ME), comprising awaiting a performance of the graphical task (RAF), timing the wait clocked by at least one of said trigger signals (TTEVj), and at least one generation of a safety signal (AR) if the timing of the wait has exceeded a reference value.

8. Method according to one of the preceding claims, the electronic module being a display interface module (DSPL), wherein said operations (OPi) comprise at least one of the following operations:
- an operation of refreshing (OP1) the display interface (DSPL) at a time controlled by a first trigger signal (TTEV1);
- a graphical calculation operation (OP2) at a time controlled by a second trigger signal (TTEV2);
- a tactile coordinate reading operation (OP3) of a tactile controller (TACT) at a time controlled by a third trigger signal (TTEV3).

9. Method according to one of the preceding claims, the electronic module being a module of the camera interface type (CAMIF), wherein said operations (OPi) comprise at least one of the following graphical operations:
- transmitting an outgoing stream of image data (OP4) at a time controlled by a first trigger signal (TTEV4);
- digitally processing a stream of image data (OP5), such as data compression, at a time controlled by a second trigger signal (TTEV5).

10. Control system for a multimedia interface (IM) electronic module, such as a display interface (DSPL) or a camera interface (CAMIF), comprising the electronic module (ME) and including:
- a timing signal generator (620) configured to generate, outside an electronic module (ME), at least one digital timing signal (LCK, TCK) emulating at least one first synchronization signal (HSYNC, VSYNC) internal to the module and not available outside the module, and, in the presence of a second synchronization signal (HSYNC, VSYNC, TE) coming from the module and available outside the module, to generate said at least one timing signal (LCK, LCK) emulating said at least one first signal using the second signal; said at least one timing signal (TCK, LCK) comprising a line start signal (LCK) emulating a horizontal synchronization signal (HSYNC) of the multimedia interface (IM) module, and/or a frame start signal (TCK) emulating a vertical synchronization signal (VSYNC) of the multimedia interface module (IM);
- a trigger signal development circuit (CI) for external control of the module (ME), comprising at least one counting circuit (630, 640) configured to count edges of the timing signals, and a trigger signal generating circuit (650) configured to generate the trigger signals (TTEVi) conditionally on the current values of said at least one counting circuit (630, 640);
the system comprising a computing unit (GPU) configured to independently and autonomously perform control operations (OPi) at times respectively triggered by said trigger signals (TTEVi).

11. System according to Claim 10, wherein said timing signal generator (620) comprises a frequency divider (LCC, TCC) configured to divide the frequency of an elementary digital clock signal (SYSCK, TCCK), to generate said at least one timing signal (LCK, TCK).

12. System according to Claim 11, wherein the timing signal generator (620) is configured to generate said at least one timing signal (TCK) emulating said at least one first signal using the second signal (HSYNC) as an elementary digital clock signal (TCCK).

13. System according to Claim 11, wherein the timing signal generator (620) is configured to generate said at least one timing signal (LCK) emulating said at least one first signal using the second signal (VSYNC) to reset a phase of said timing signal derived from the division of the frequency of the elementary digital clock signal (SYSCK) by the frequency divider (LCC).

14. System according to one of Claims 10 to 13, wherein the timing signal generator (620) is configurable according to intrinsic characteristics of the module (ME).

15. System according to one of Claims 10 to 14, wherein said at least one counting circuit (630, 640) comprises a plurality of counting circuits, and said trigger signal generator circuit (650) is configured to generate at least one complex trigger signal (TTEVi) conditionally by a combination of conditions on different current values of said counting circuits (630, 640).

16. System according to one of Claims 10 to 15, further comprising a device for monitoring a graphical task (660) of said multimedia interface (IM) module, configured to wait for a performance of the graphical task (RAF), time the wait in a clocked manner by at least one of said trigger signals (TTEVi), and generate at least one safety signal (AR, preAR) if the timing of the wait has exceeded a respective reference value.

17. System according to any one of Claims 10 to 16, incorporated into a microcontroller or a system-on-chip.

18. System according to any one of Claims 10 to 17, wherein the electronic module is a display interface module (DSPL) and the computing unit (GPU) is configured to perform at least one of the following control operations:
- an operation of refreshing (OP1) the display interface (DSPL) at a time controlled by a first trigger signal (TTEV1);
- a graphical calculation operation (OP2) at a time controlled by a second trigger signal (TTEV2);
- a tactile coordinate reading operation (OP3) of a tactile controller (TACT) belonging to the system, at a time controlled by a third trigger signal (TTEV3).

19. System according to any one of Claims 10 to 17, wherein the electronic module is a camera interface module (CAMIF) and the computing unit (GPU) is configured to perform at least one of the following control operations:
- an operation of transmitting an outgoing stream of image data (OP4) at a time controlled by a first trigger signal (TTEV4);
- an operation of digitally processing a stream of image data (OP5), such as data compression, at a time controlled by a second trigger signal (TTEV5).

20. Electronic device (APP), such as a smartwatch or a video camera, including a system (SYS) according to any one of Claims 10 to 19.
